# EUROPEAN PATENT APPLICATION

(11) **EP 4 656 276 A1**
(43) Date of publication of application: **03.12.2025**
(21) Application number: 25169781.9
(22) Date of filing: 10.04.2025
(51) Int. Cl.: B01D 53/56, B01D 53/70

(54) **METHOD FOR TREATING GREENHOUSE GASES AND SYSTEM APPLYING THE SAME**

(30) Priority: 28.05.2024 US 202463652220 P; 29.11.2024 TW 113146430
(71) Applicant: Industrial Technology Research Institute, 310401 Hsinchu (TW)
(72) Inventor: HUANG, Yu-Ting, 300 Hsinchu City (TW); LIN, Yi-Hsing, 733 Tainan City (TW); HSU, Ju-Chen, 300 Hsinchu City (TW); HE, Long, 231 New Taipei City (TW); KUO, Chun-Nan, 427 Taichung City (TW); LAI, Yu-Lun, 721 Tainan City (TW); YAN, Shaw-Yi, 310 Hsinchu County (TW)
(74) Representative: dompatent

(57) **Abstract**

A method for treating greenhouse gases, includes steps as follows: A greenhouse gas is introduced into a reaction chamber, wherein the greenhouse gas is represented by a chemical formula AB, A is a fluorine atom (F) or a nitrogen atom (N), and B is an atom or a group that can form a bond with the fluorine atom or the nitrogen atom. A hydrogen-containing compound is introduced into the reaction chamber. A plasma flame is provided in the reaction chamber to reduce the greenhouse gas, so that nitrogen oxides (NOₓ) content in the reaction chamber is less than 200 ppm, and/or the destruction and removal efficiency (DRE) of the greenhouse gas in the reaction chamber within a time interval/space is greater than 95%.

## Description

### TECHNICAL FIELD

The disclosure relates in general to a method and system for treating industrial process exhaust gases, and more particularly to a method and system for treating greenhouse gases.

### BACKGROUND

According to the Kyoto Protocol adopted at the third session of the Conference of the Parties (COP 3) held in Kyoto, Japan in 1997, the United Nations Framework Convention on Climate Change (UNFCCC) requires member countries to adopt Specific plans and timetables on emissions and removals of six major greenhouse gases. Among these six major greenhouse gases, the removals of fluorine-containing greenhouse gases (such as, hydrofluorocarbons (HFCs), perfluorocarbons (PFCs), sulfur hexafluoride (SF₆), etc.) and nitrogen-containing greenhouse gases (For example, including nitrous oxide (N₂O), nitrogen trifluoride (NF₃), etc.) is the most important, because they have a global warming potential (GWP) that is about 7000 to 25000 times higher than that of carbon dioxide (CO₂), a half-life time that is about 60 to 1,000 times than that of CO₂, and its cumulative effect to the atmosphere is irreversible, so it requires more effective control and treatment.

However, PFCs such as carbon tetrafluoride (CF₄), SF₆, and NF₃ etc. are still widely used in certain semiconductor processes (such as, dry etching processes and chamber cleaning procedures in chemical vapor deposition (CVD) processes) serving as process gases. Most of these process gases, except for a small part thereof are consumed in the production reaction, are discharged as exhaust (waste) gases. With the vigorous development of the semiconductor industry in recent years, semiconductor process exhaust (waste) gases have become one of the important sources of fluorine-containing greenhouse gases and nitrogen-containing greenhouse gases. Although a variety of clean technologies have been proposed for treating the greenhouse gases that are stable and difficult to decompose, their removal efficiency in some circumstances is still limited. No matter which clean technology is used, it is a critical issue to control the generation of CO₂ and nitrogen oxides (NOₓ) (both are precursors of PM2.5) as well as other secondary pollutants.

Therefore, there is a need to provide an advanced method for treating greenhouse gases and the system applying the same to overcome the drawbacks of the prior art.

### SUMMARY OF THE DISCLOSURE

One embodiment of the present disclosure is to provide a method for treating greenhouse gases, wherein the method includes steps as follows: A greenhouse gas is introduced into a reaction chamber, wherein the greenhouse gas is represented by a chemical formula AB, A is a fluorine atom (F) or a nitrogen atom (N), and B is an atom or a group that can form a bond with the fluorine atom or the nitrogen atom. A hydrogen-containing compound is introduced into the reaction chamber. A plasma flame is provided in the reaction chamber to reduce the greenhouse gas, so that nitrogen oxides (NOₓ) content in the reaction chamber is less than 200 ppm, and/or the destruction and removal efficiency (DRE) of the greenhouse gas in the reaction chamber within a time interval/space is substantially greater than 95%.

Another embodiment of the present disclosure is to provide a method for treating greenhouse gases, wherein the method includes steps as follows: A greenhouse gas is introduced into a reaction chamber, wherein the greenhouse gas is represented by a chemical formula AB, A is a fluorine atom (F) or a nitrogen atom (N), and B is an atom or a group that can form a bond with the fluorine atom or the nitrogen atom. A hydrogen-containing compound is introduced into the reaction chamber. A plasma flame is provided in the reaction chamber to reduce the greenhouse gas to form byproducts including hydrofluoric acid (HF).

Yet another embodiment of the present disclosure is to provide a system for treating greenhouse gases, wherein the system includes a reaction chamber, a greenhouse gas source, a hydrogen-containing compound source and a plasma source. The greenhouse gas source is used to store and introduce a greenhouse gas into the reaction chamber. The hydrogen-containing compound source is used to store and introduce a hydrogen-containing compound into the reaction chamber to make a ratio of a fluorine atom equivalent concentration or a nitrogen atom equivalent concentration in the greenhouse gas to a hydrogen atom equivalent concentration in the hydrogen-containing compound substantially between 3.5 and 0.5. The plasma source provides a plasma flame to the reaction chamber to reduce the greenhouse gas, so that NOₓ content in the reaction chamber is less than 200 ppm, and/or a byproduct including HF is formed.

### BRIEF DESCRIPTION OF THE DRAWINGS

FIG. 1 is a diagram illustrating a system for treating greenhouse gases according to one embodiment of the present disclosure;
FIG. 2 is a flow chart illustrating a method for treating greenhouse gases using the system for treating greenhouse gases according to one embodiment of the present disclosure;
FIG. 3 is a statistical histogram illustrating the DRE of the greenhouse gas after introducing different single or multiple types of hydrogen-containing compound into the reaction chamber to react with the greenhouse gas in a plasma according to one embodiment of the present disclosure;
FIG. 4 is a statistical histogram illustrating the relative reduction rate of NO in the exhaust gas, after introducing different single or multiple types of hydrogen-containing compound into the reaction chamber to react with greenhouse gas in a plasma according to one embodiment of the present disclosure;
FIG. 5 is a statistical histogram illustrating the relative increase and reduction rates of NOₓ content in the exhaust gas after additional clean dry air (CDA) is introduced into the reaction chamber to participate in the reaction under the same conditions;
FIG. 6A is a statistical histogram illustrating DRE of the greenhouse gases after introducing different single or multiple types of hydrogen-containing compound into the reaction chamber to react with the greenhouse gas in a plasma, in order to select a preferred plasma operating power from a range between 6 KW and 18 KW, according to one embodiment of the present disclosure; and
FIG. 6B is a statistical histogram illustrating NOₓ content in the exhaust gas under the same conditions.

In the following embodiments, various specific details are described below, and these embodiments are disclosed just for purpose of clearly describing the present invention. However, it should be appreciated that, in some other embodiments, the present invention can be practiced without or omitting these specific details. In addition, to simplify the drawings, the well-known structures and elements are depicted by way of example only.

### DETAILED DESCRIPTION OF THE DISCLOSURE

The present disclosure provides a method and system for treating greenhouse gases, which can increase the DRE of greenhouse gases in a reaction chamber to more than 95%, and can reduce NOₓ content in the reaction chamber to less than 200 ppm. While efficiently removing greenhouse gases, it also reduces the occurrence of secondary pollutants. The above and other aspects of the disclosure will become better understood by the following detailed description of the preferred but non-limiting embodiment(s). The following description is made with reference to the accompanying drawings:

Several embodiments of the present disclosure are disclosed below with reference to accompanying drawings. However, the structure and contents disclosed in the embodiments are for exemplary and explanatory purposes only, and the scope of protection of the present disclosure is not limited to the embodiments. It should be noted that the present disclosure does not illustrate all possible embodiments, and anyone skilled in the technology field of the disclosure will be able to make suitable modifications or changes based on the specification disclosed below to meet actual needs without breaching the spirit of the disclosure. The present disclosure is applicable to other implementations not disclosed in the specification.

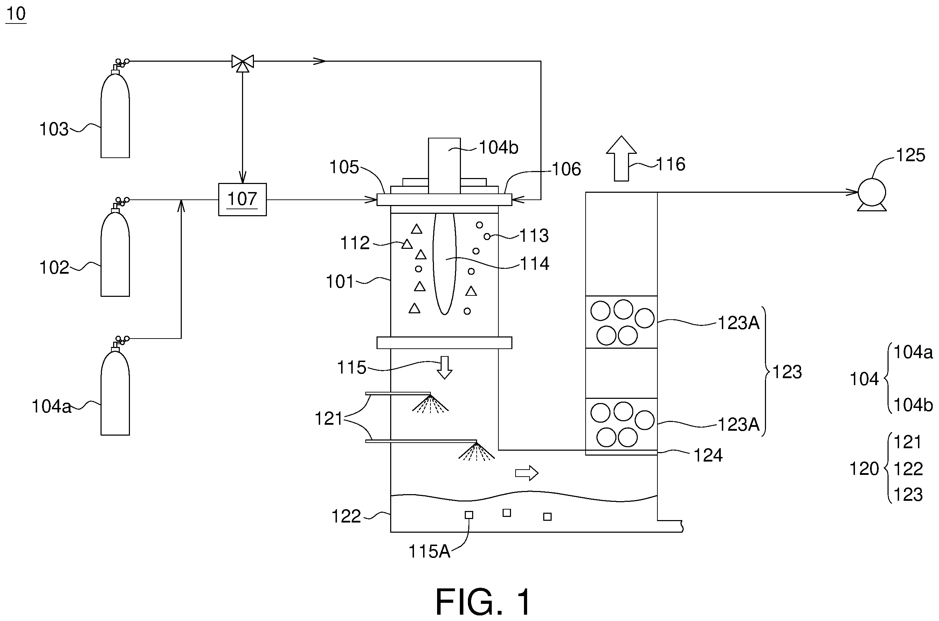

Referring to FIG. 1, FIG. 1 is a diagram illustrating a system for treating greenhouse gases 10 according to one embodiment of the present disclosure. The system for treating greenhouse gases 10 includes a reaction chamber 101, a greenhouse gas source 102, a hydrogen-containing compound source 103 and a plasma source 104. The greenhouse gas source 102 includes a greenhouse gas 112, and apparatuses (e.g., pipelines, gas valves, and other inspection and control devices) for storing and introducing the greenhouse gas 112 into the reaction chamber 101. The hydrogen-containing compound source 103 includes a hydrogen-containing compound 113, and apparatuses (e.g., pipelines, gas valves, and other inspection and control devices) for storing and introducing the hydrogen-containing compound 113 into the reaction chamber 101. The plasma source 104 includes apparatuses and carrier gases 104a for providing a plasma flame 114 into the reaction chamber 101.

For example, in some embodiments of the present disclosure, the reaction chamber 101 may be a semi-enclosed cylindrical shell structure, one end of which may be connected to the greenhouse gas source 102, the hydrogen-containing compound source 103 and the plasma source 104; and the reacted gas can be discharged from the other end. In the present embodiment, the plasma source 104 may include at least one carrier gas 104a (e.g., nitrogen (N₂)) and a plasma torch 104b extending from one end of the reaction chamber 101 into the reaction chamber 101. The plasma torch 104b can introduce the carrier gas 104a into the reaction chamber 101, and generate a directional plasma jet (e.g., the plasma flame 114) in the reaction chamber 101 by using a high current direct current (DC), alternating current (AC) or radio frequency (RF) power source.

The greenhouse gas source 102 and the hydrogen-containing compound source 103 may be pipeline structures for storing the greenhouse gas 112 and the hydrogen-containing compound 113 and for guiding these two in to the reaction chamber 101 through the injection holes 105 and 106 connected to the reaction chamber 101 respectively. By adjusting the injection holes 105 and 106, the concentrations of the greenhouse gas 112 and the hydrogen-containing compound 113 in the reaction chamber 101 can be controlled (before the plasma flame 114 is provided), so as to provide and maintain an oxygen-poor/hydrogen-rich environment in the reaction chamber 101.

In some embodiments of the present disclosure, the greenhouse gas 112 can be represented by a chemical formula AB, wherein A is a fluorine atom (F) or a nitrogen atom (N), and B is an atom or a group that can form a bond with the fluorine atom or the nitrogen atom. The hydrogen-containing compound 113 may be any gaseous, liquid or solid compounds that can generate hydrogen free radicals with a concentration higher than its own equivalent concentration after being impacted by plasma free electrons. The oxygen-poor/hydrogen-rich environment refers to controlling the ratio of the fluorine atom equivalent concentration or nitrogen atom equivalent concentration in the greenhouse gas 112 to the hydrogen atom equivalent concentration in the hydrogen-containing compound 113 in the reaction chamber 101 to be substantially in the range between 3.5 and 0.5.

In one embodiment, the oxygen-poor/hydrogen-rich environment refers to that the ratio of the fluorine atom equivalent concentration in the greenhouse gas 112 to the hydrogen atom equivalent concentration in the hydrogen-containing compound 113 in the reaction chamber 101 is controlled about 1.5. In one embodiment, the oxygen-poor/hydrogen-rich environment refers to that the ratio of the nitrogen atomic equivalent concentration in the greenhouse gas 112 to the hydrogen atomic equivalent concentration in the hydrogen-containing compound 113 in the reaction chamber 101 is controlled about 3.

For example, in some embodiments of the present disclosure, the greenhouse gas 112 may include SF₆, CF₄, NF₃, trifluoromethane (CHF₃), tetrafluoroethylene (C₂F₄), hexafluoroethane(C₂F₆), octafluoropropane (C₃F₈), hexafluorobutane, Diene (C₄F₆), octafluorocyclobutane (c-C₄F₈), octafluorotetrahydrofuran (C₄F₈O), octafluorocyclopentene (C₅F₈), difluoromethane (CH₂F₂), fluoromethane (CH₃F), pentafluoroethane (C₂HF₅), nitrous oxide (N₂O) or a gas consisting of any compound or any arbitrary combinations of the above compounds. The hydrogen-containing compound 113 may be hydrogen (H₂), water (H₂O), hydrogen peroxide (H₂O₂), methane (CH₄), ammonia (NH₃), urea ((NH₂)₂CO·H₂O), ammonia water (NH₄OH), or any arbitrary combinations of the above compounds.

Under the action of (the plasma flame 114 provided by) the plasma torch 104b, the hydrogen-containing compound 113 can generate hydrogen-containing gases to reduce the fluorine-containing and/or nitrogen-containing greenhouse gas 112, so that NOₓ content in the reaction chamber 101 is less than 200 ppm, and/or a byproducts 115A including HF is formed. Its basic working principle is as follows:

The carbon-fluorine (C-F) or sulfur-fluorine (S-F) bonds in the greenhouse gas 112 (e.g., SF₆ or CF₄) can be temporarily broken by the high-energy free electron impact of the plasma flame 114. When the hydrogen-containing compound 113 (such as, H₂, H₂O, H₂O₂) is introduced, the high energy plasma of the plasma torch 104b pyrolyzes, atomizes, and ionizes the hydrogen-containing compound 113 to form hydrogen radicals, thereby forming a reducing atmosphere in the oxygen-poor/hydrogen-rich plasma environment. Since the reduction reaction of fluorine in greenhouse gas 112 with hydrogen in a reducing atmosphere is an exothermic reaction, hydrogen radicals do not need much energy to easily combine with fluorine to form a stable and easy-to-handle HF product; and thus can effectively inhibit the reverse reaction of the broken carbon-fluorine bond (C-F) or sulfur-fluorine bond (S-F). Therefore, the greenhouse gas 112 can be thermally decomposed efficiently. In some embodiments, the destruction and removal efficiency (DRE) of the greenhouse gas 112 in the reaction chamber 101 can be increased to above 95%, preferably greater than or equal to 99%.

In one exemplary embodiment, a hydrogen-containing compound 113 is used to treat the greenhouse gas 112 containing SF₆. The reaction equation is as follows:

SF₆ + 4H₂ →H₂S + 6 HF

SF₆ + 3H₂ → S + 6 HF

Similarly, when treating the greenhouse gas 112 containing N₂O, the hydrogen-containing compound 113 is introduced into the reaction chamber 101, and the plasma flame 114 is used to provide an oxygen-poor/hydrogen-rich reducing plasma environment. The greenhouse gas 112 (N₂O) is effectively decomposed through a reduction reaction.

Of note that, the high-energy free electrons of the plasma flame 114 can also trigger an oxidation reaction of the greenhouse gas 112 in the reaction chamber 101. However, in the oxygen-poor/hydrogen-rich environment formed by the introduction of the hydrogen-containing compound 113, the probability of oxidation reaction can be reduced. In addition to increasing the DRE of the high carbon equivalent greenhouse gas 112 greater than or equal to 95% ( ≧ 95%), preferably to increase the DRE of the greenhouse gas 112 greater than or equal to 99% (≧99%), and to increase the DRE of N₂O greater than or equal to 60% (≧60%), it can also effectively reduce the emission of secondary pollutants (such as, NOₓ and CO₂) generated by the oxidation reaction.

In addition, in some embodiments of the present disclosure, the system for treating greenhouse gases 10 further includes a byproducts washing module 120, which is interconnected with the reaction chamber 101 and is used to wash the exhaust gas 115 (including the byproducts 115A) generated after the treatment. For example, in the present embodiment, the byproducts washing module 120 includes a spraying device 121, circulating water tank 122 and wet scrubber washing tower 123.

The treated exhaust gas 115 flows out of the reaction chamber 101 and enters the spraying device 121, which includes at least one set of sprinklers to provide water mist by a nozzle equipped with a water volume control valve (not shown). The water mist can quickly absorb the heat of the exhaust gas 115 to quickly cool it down, and dissolve a portion of the byproducts 115A (e.g., hydrogen fluoride (HF)) in the exhaust gas 115 to form wastewater falling into the circulating water tank 122 below, and the wastewater containing part of the dissolved byproducts 115A is discharged through bottom drainage.

The remaining exhaust gas 115 is filtered through the filter 124 to remove impurities and solids, and is introduced into the wet scrubber washing tower 123. The wet scrubber washing tower 123 that is filled with filler 123A having high surface area can further intercept and filter out solid particles (e.g., silicon-containing powder, etc.) entrained in the exhaust gas 115. The clean exhaust gas 116 is then discharged to the outside. In addition, a booster windmill 125 can be installed at the rear end of the wet scrubber washing tower 123 to supplement the static wind pressure. Such that, the exhaust gas 116 can be discharged smoothly, when the static pressure of the airflow provided by the exhaust gas 115 is insufficient.

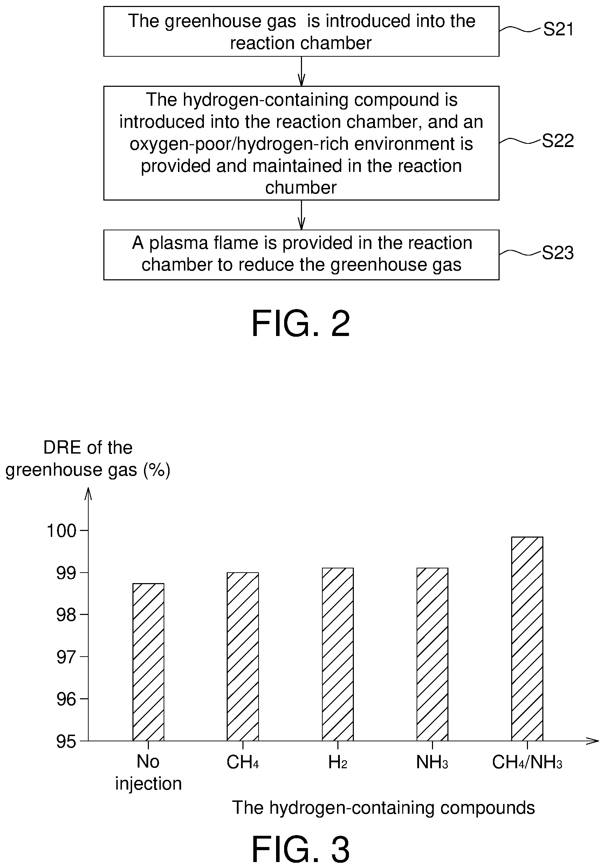

Referring to FIG. 2, FIG. 2 is a flow chart illustrating a method for treating greenhouse gas 112 using the system for treating greenhouse gases 10 according to one embodiment of the present disclosure. The method includes steps as follows: As described in step S21, the greenhouse gas 112 is introduced into the reaction chamber 101, and in step S22, the hydrogen-containing compound 113 is introduced into the reaction chamber 101, and an oxygen-poor/hydrogen-rich environment is provided and maintained in the reaction chamber 101. For example, the ratio of the fluorine atom equivalent concentration or the nitrogen atom equivalent concentration in the greenhouse gas 112 to the hydrogen atom equivalent concentration in the hydrogen-containing compound 113 is maintained in a range between 3.5 and 0.5.

In some embodiments of the present disclosure, the greenhouse gas 112 and the hydrogen-containing compound 113 can be introduced into the reaction chamber 101 respectively and successively; and the introducing order of the greenhouse gas 112 and the hydrogen-containing compound 113 is not particularly limited. Alternatively, in some other embodiments of the present disclosure, the greenhouse gas 112 and the hydrogen source compound 113 may be introduced into the reaction chamber 101 simultaneously. For example, in a specific embodiment, the greenhouse gas 112 and the hydrogen-containing compound 113 may be pre-mixed in the mixing zone 107 before being introduced into the reaction chamber 101. The step of introducing the hydrogen-containing compound 113 into the reaction chamber 101 can be carried out by using a gas injection method, a liquid injection method or a gas/liquid mixed injection method according to the state (gaseous, liquid or solid) of the hydrogen-containing compound 113.

As described in step S23, a plasma flame 114 is provided in the reaction chamber 101 to reduce the greenhouse gas 112 so that NOₓ content in the reaction chamber 101 is less than 200 ppm and byproducts including HF is formed. In some embodiments of the present disclosure, the plasma power applied to the plasma torch 104b is maintained in a range between 6 kilowatts (KW) and 18 KW to generate the plasma flame 114 for reducing the fluorine-containing and/or nitrogen-containing greenhouse gas 112.

In order to verify the effect of introducing hydrogen-containing compound 113 on the treatment of greenhouse gas 112, different single or multiple types of hydrogen-containing compounds 113 (for example, CH₄, H₂, NH₃ and/or methane mixed Ammonia (CH₄/NH₃)) are introduced into the reaction chamber 101; and an oxygen-poor/hydrogen-rich environment is formed in the reaction chamber 101 by the plasma flame 114, used to treat the greenhouse gas 112 containing SF₆; and DRE of the greenhouse gas 112 in the reaction chamber 110 is observed.

The test results are shown in FIG. 3. FIG. 3 is a statistical histogram illustrating the DRE of the greenhouse gas 112 after introducing different single or multiple types of hydrogen-containing compound 113 into the reaction chamber 110 to react with the greenhouse gas 112 in a plasma according to one embodiment of the present disclosure. In contrast, when the hydrogen-containing compound 113 is not introduced, the DRE of the greenhouse gas 112 is only about 98%. After introducing different single types of hydrogen-containing compounds 113 into the reaction chamber 101, the DRE of the greenhouse gas 112 all reached more than 99%. This indicates that the method of introducing the hydrogen-containing compound 113 and forming an oxygen-poor/hydrogen-rich environment in the reaction chamber 101 by the plasma flame 114 to treat the greenhouse gas 112 can achieve better DRE of the greenhouse gas 112.

Similar, the effect on reducing the generation of secondary pollutants by introducing the hydrogen source compound 113 and form an oxygen-poor/hydrogen-rich environment can be verified. In which, different single or multiple types of hydrogen-containing compounds 113 (for example, CH₄, H₂, NH₃ and/or CH₄/NH₃) are introduced into the reaction chamber 101; and an oxygen-poor/hydrogen-rich environment is formed in the reaction chamber 101 by the plasma flame 114, used to treat the greenhouse gas 112 containing SF₆; and the change in the content of NOₓ (e.g., nitric oxide (NO)) in the treated exhaust gas 115 is observed.

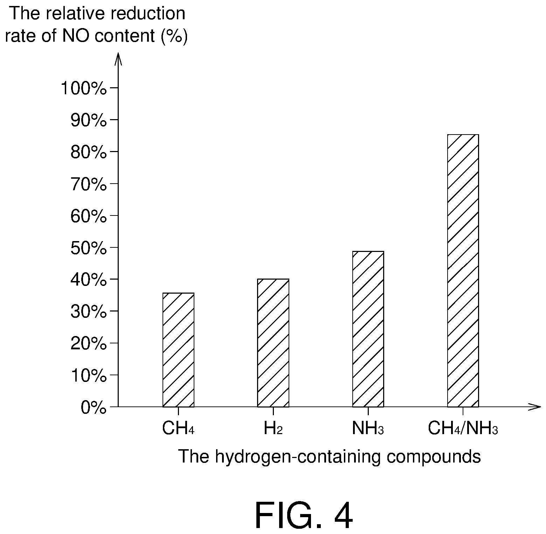

The test results are shown in FIG. 4. FIG. 4 is a statistical histogram illustrating the relative reduction rate of NO in the exhaust gas 115, after introducing different single or multiple types of hydrogen-containing compound 113 into the reaction chamber 101 to react with the greenhouse gas 112 in a plasma according to one embodiment of the present disclosure. In comparison the condition of no hydrogen-containing compound 113 is introduced, the concentration of residual NO after the greenhouse gas 112 participates in the reaction with plasma is much higher than that of the condition as the hydrogen-containing compound 113 (e.g., for example, CH₄, H₂, NH₃ and/or CH₄/NH₃) is introduced and forming an oxygen-poor/hydrogen-rich environment in the reaction chamber 101. In the present embodiment, after the greenhouse gas 112 participates in the reaction with plasma, the percentage NO concentration is relatively reduced about 36-86%. This indicates that the introduction of the hydrogen-containing compound 113 to form an oxygen-poor/hydrogen-rich environment can inhibit the generation of NOₓ in the reaction chamber 101.

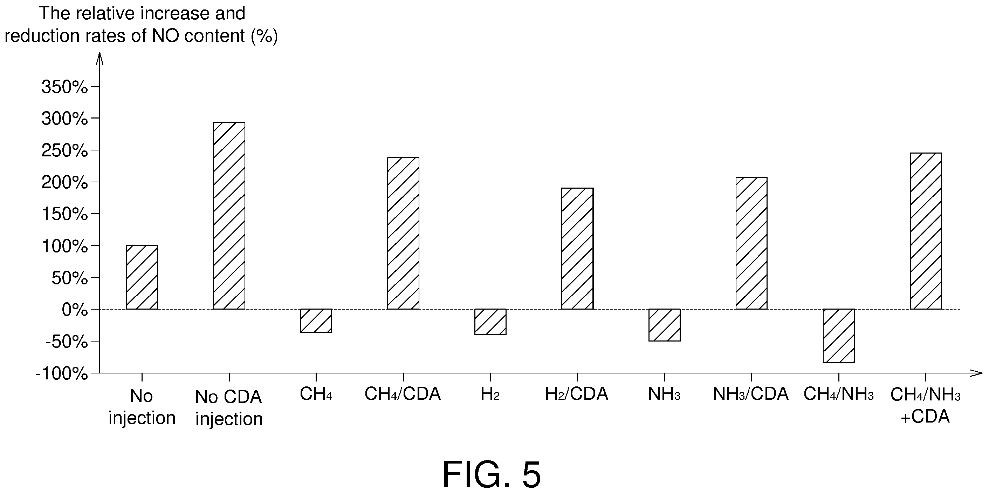

Referring to FIG. 5, FIG. 5 is a statistical histogram illustrating the relative increase and reduction rates of NOₓ content in the exhaust gas 115 after introducing different single or multiple types of hydrogen-containing compound 113 (e.g., for example, CH₄, H₂, NH₃ and/or CH₄/NH₃) into the reaction chamber 101 to react with the greenhouse gas 112 in a plasma. The comparison is made with the statistical histogram illustrating the relative increase and decrease of NOₓ content in the exhaust gas 115 after introducing additional CDA into the reaction chamber 101 to participate in the reaction under the same conditions.

The test results in FIG. 5 indicates that after additional CDA is introduced to participate the reaction in a plasma, NOₓ content in the exhaust gas 115 is significantly increased. Obviously, the DRE of NOₓ is reduced due to the dilution of the equivalent concentration of hydrogen atoms in the reaction chamber 101. It further indicated that the oxygen-poor/hydrogen-rich environment formed in the reaction chamber 101 can reduce NOₓ content in the exhaust gas 115.

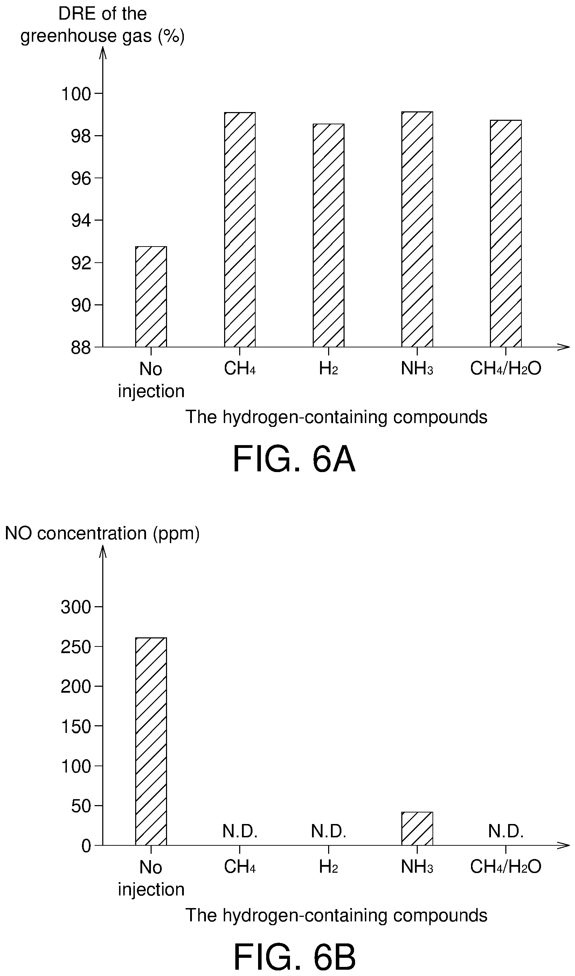

Referring to FIGs. 6A and 6B, FIG. 6A is a statistical histogram illustrating DRE of the greenhouse gas 112 after introducing different single or multiple types of hydrogen-containing compound 113 into the reaction chamber 101 to react with greenhouse gas 112 in a plasma, in order to select a preferred plasma operating power from a range of 6 KW to 18 KW, according to one embodiment of the present disclosure. FIG. 6B is a statistical histogram illustrating NOx content in the exhaust gas 115 under the same conditions.

The test results of FIG. 6A and FIG. 6B indicate that in the range of plasma power between 6 KW and 18 KW, it can preferably provide a better DRE of the greenhouse gas 112 (DRE>95%) and excellent performance under NOₓ suppression, even to non-detectable results. It can be fully verified that providing an oxygen-poor/hydrogen-rich environment can effectively treat greenhouse gas 112 and inhibit the generation of secondary pollutants.

According to the aforementioned embodiments, a method for treating greenhouse gases and a system applying the same are provided. An oxygen-poor/hydrogen-rich environment is provided and maintained in the reaction chamber 101 by introducing the hydrogen-containing compound 113, and the plasma flame 114 is used to generate hydrogen radicals from the hydrogen-containing compound 113 to reduce the fluorine-containing and/or nitrogen-containing greenhouse gas 112, while inhibiting the oxidation reaction of greenhouse gas 112. Such that, the greenhouse gas 112 can be efficiently removed, the emission of secondary pollutants (such as, NOₓ and CO₂) can be also reduced. The DRE of greenhouse gas 112 in the reaction chamber 101 can be increased to above 95%, and the NOₓ content in the reaction chamber 101 can be reduced to below 200 ppm.

While the invention has been described by way of example and in terms of the preferred embodiment (s), it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A method for treating greenhouse gases, **characterized in that** the method comprises:
introducing a greenhouse gas (112) into a reaction chamber (101), wherein the greenhouse gas (112) is represented by a chemical formula AB, A is a fluorine atom (F) or a nitrogen atom (N), and B is an atom or a group that can form a bond with the fluorine atom or the nitrogen atom;
introducing a hydrogen-containing compound (113) into the reaction chamber (101); and
providing a plasma flame (114) in the reaction chamber (101) to reduce the greenhouse gas (112), so as to make nitrogen oxides (NOₓ) content in the reaction chamber (101) less than 200 ppm, and/or the destruction and a removal efficiency (DRE) of the greenhouse gas (112) in the reaction chamber (101) within a time interval/space greater than 95%.

2. The method according to claim 1, wherein the greenhouse gas (112) comprises a compound or a mixture selected from a group consisting of sulfur hexafluoride (SF₆), carbon tetrafluoride (CF₄), nitrogen trifluoride (NF₃), trifluoromethane (CHF₃), tetrafluoroethylene (C₂F₄), hexafluoroethane(C₂F₆), octafluoropropane (C₃F₈)₇ hexafluorobutane, Diene (C₄F₆), octafluorocyclobutane (c-C₄F₈), octafluorotetrahydrofuran (C₄F₈O), octafluorocyclopentene (C₅F₈), difluoromethane (CH₂F₂), fluoromethane (CH₃F), pentafluoroethane (C₂HF₅), nitrous oxide (N₂O) and arbitrary combinations thereof.

3. The method according to claim 1, wherein the greenhouse gas (112) comprises nitrous oxide (N₂O), and before the plasma flame (114) is provided, a ratio of a fluorine atom equivalent concentration or a nitrogen atom equivalent concentration in the greenhouse gas (112) to the hydrogen atom equivalent concentration in the hydrogen-containing compound (113) is between 3.5 and 0.5.

4. The method according to claim 3, wherein the DRE of the greenhouse gas (112) in the reaction chamber (101) within the time interval/space greater than 95%.

5. The method according to claim 4, wherein a DRE of N₂O in the reaction chamber (101) within the time interval/space greater than 60%.

6. The method according to claim 1, wherein the hydrogen-containing compound (113) comprises a compound or a mixture selected from a group consisting of hydrogen (H₂), water (H₂O), hydrogen peroxide (H₂O₂), methane (CH₄), ammonia (NH₃), urea ((NH₂)₂CO·H₂O), ammonia water (NH₄OH) and arbitrary combinations thereof.

7. The method according to claim 1, wherein the step of introducing the hydrogen-containing compound (113) into the reaction chamber (101) comprises a gas injection, a liquid injection or a gas/liquid mixed injection.

8. The method according to claim 7, wherein the step of introducing the hydrogen-containing compound (113) into the reaction chamber (101) comprises pre-mixing the greenhouse gas (112) with the hydrogen-containing compound (113) before introducing into the reaction chamber (101), or introducing the hydrogen-containing compound (113) into the reaction chamber (101) independently.

9. The method according to claim 1, wherein the step of providing the plasma flame (114) in the reaction chamber (101) comprises maintaining a plasma power applied to a plasma torch (104b) in a range between 6 kilowatts (KW) and 18 KW.

10. The method according to claim 1, wherein the step of
introducing the hydrogen-containing compound (113) into the reaction chamber (101) makes a ratio of a fluorine atom equivalent concentration or a nitrogen atom equivalent concentration in the greenhouse gas (112) to a hydrogen atom equivalent concentration in the hydrogen-containing compound (113) between 3.5 and 0.5, so as to reduce the greenhouse gas (112) to form byproducts (115A) including hydrofluoric acid (HF).

11. The method according to claim 10, wherein the greenhouse gas (112) comprises N₂O and SF₆, and the DRE of the greenhouse gas (112) in the reaction chamber (101) within the time interval/space greater than 95%.

12. The method according to claim 11, wherein a DRE of N₂O in the reaction chamber (101) within the time interval/space greater than 60%.

13. A system for treating greenhouse gases, **characterized in that** the system comprises:
a reaction chamber(101);
a greenhouse gas source (102), used to store and introduce a greenhouse gas (112) into the reaction chamber (101);
a hydrogen-containing compound source (103), used to store and introduce a hydrogen-containing compound (113) into the reaction chamber (101) and to make a ratio of a fluorine atom equivalent concentration or a nitrogen atom equivalent concentration in the greenhouse gas (112) to a hydrogen atom equivalent concentration in the hydrogen-containing compound (113) substantially between 3.5 and 0.5; and
a plasma source (104), used to provide a plasma flame (114) to the reaction chamber (101) to reduce the greenhouse gas (112), so as to make NOₓ content in the reaction chamber (101) less than 200 ppm, and/or forming a byproduct including HF.

14. The system according to claim 13, further comprising a byproducts washing module (120) interconnected with the reaction chamber (101) and used to wash the byproduct.

15. The system according to claim 13, wherein the plasma source (104) has a plasma power ranging between 6 KW and 18 KW.
